# EUROPEAN PATENT APPLICATION

(11) **EP 4 825 747 A2**
(43) Date of publication of application: **21.10.2026**
(21) Application number: 26194667.7
(22) Date of filing: 07.08.2020
(51) Int. Cl.: B65D 8/00

(54) **GUMMY CONFECTIONERY-COATED NON-EDIBLE CONTAINER**

(30) Priority: 09.08.2019 NZ 19756215
(62) Document number(s) of the earlier application(s) in accordance with Art. 76 EPC: 20853216.8 / 4 009 801
(71) Applicant: ZURU EDGE LIMITED, Kowloon (HK)
(72) Inventor: LEE, Chung Hyun, 801-Ho Seoul (KR); SMITH, David Johnston, 0632 Auckland (NZ); SANTILLAN, Diwata Katrina Dinglasa, 2012 Auckland (NZ); HARROLD, Ethan Luke, 0632 Auckland (NZ); HUTCHINSON, Ethan, 0792 Auckland (NZ)
(74) Representative: Finnegan Europe LLP

(57) **Abstract**

An article for containing a toy is disclosed. The article comprising multiple sections of gummy confectionery layer loosely adhered to an outer surface of a non-edible container, wherein each section of the multiple sections is removable from the outer surface independently from other sections of the multiple of sections by one or more physical features.

## Description

### TECHNICAL FIELD

This invention relates to the combination of an edible material with a non-edible object, particularly where the non-edible object is a container and contains a toy. The invention incorporates a layer of gelatinous gummy on the surface of the container as the edible material.

### DESCRIPTION OF PRIOR ART

Numerous combinations of an edible material and a non-edible container have been described. Some examples that include confectionery-encapsulated toy containers are U.S. Pat. Nos. US20110123687A1, US5925391, US6099872, and US20170050789A1, each of which is incorporated by reference in its entirety. All patents, patent applications, published applications and publications, websites and other published materials referred to throughout the entire disclosure herein, unless noted otherwise, are incorporated by reference in their entirety.

U.S. Pat. No. US20110123687A1 describes a separable shell wherein a ridge extends along the outer surface to aid in conveying to a child that there is non-edible material below the candy coating. U.S. Pat. No. US20170050789A1 describes a divisible container that may receive a first and second confectionery coating on each respective half, wherein the divisible container includes projections around the circumference to allow the user to see that a non-edible container is beneath. In these examples, however the confectionery coating is either, firstly, in two halves, divided by the protrusion, wherein the confectionery coating is not supported by the non-edible container, relying on packaging to retain the product's form; or secondly, the protrusion is discontinuous, allowing for the two coatings to be partially connected to increase the structural integrity.

Examples of gummy confectionery forming are described in U.S. Pat. Nos. US20040131751A1 and US6596334B1, each of which is incorporated by reference in its entirety.

U.S. Pat. No. US20040131751A1 describes a process for producing outer shells of confectionery by means of using a cold member to press a mass of liquid confectionery into a mould and form said confectionery into a cup shape. U.S. Pat. No. US20040131751A1 describes a means of producing confectionery that can receive a liquid centre filling within the formed confectionery cup.

U.S. Pat. No. US6596334B1 describes a method of producing gelled food shapes in which a liquid confectionery solution is deposited into shaped cavities within starch powder moulds. This starch mogul technique, and more recently, machines that utilize plastic or metal moulds are the current industry standard for gummy confectionery production. These methods, however, cannot produce hollow products nor would be able to incorporate encapsulated objects within the confectionery in such a way that the location of the encapsulated object, and the form of the final product is controllable.

### BACKGROUND

Surprise toy products have created a popular segment in the toy industry, and it is continuing to grow. There are two key types of surprise toys: products that contain only toys, and those that include confectionery or other food as an additional selling point. This invention's subject matter is related to the latter.

Some surprise toy confectionery products include a toy and a serving of confectionery as separately packaged items within an outer container; a product of note for this style is *Ferrero's 'Kinder Joy'.* Other products contain the toy inside a plastic container, often egg shaped or round in nature, and partially or completely encapsulate the container in chocolate; references for this style are *Ferrero's 'Kinder Surprise', Candy Treasure LLC's 'Choco Treasure' -* US20110123687, and *Yowie Group Ltd's 'Yowie' -* US20170050789A1.

Due to Food and Drug Administration (FDA) regulations, in the U.S. it is prohibited to entirely conceal any non-nutritive product within a candy coating, due to §402(d)(1) of the Federal Food, Drug, and Cosmetic Act. This results in Kinder Surprise's design of an encapsulated, non-edible, toy container to be unavailable in the U.S. market. In the "Choco Treasure" and "Yowie" products, the capsule visibly protrudes through the confectionery layer, making it obvious to the consumer that there is a non-edible component inside. These products and many similar products all use chocolate as the confectionery layer.

Previous combinations of an edible material and a non-edible container have a number of shortcomings. For example, existing combinations of a confectionery edible material and a non-edible container are typically limited to chocolate as the confectionery. Compared to gelatine-based confectioneries such as gummy, chocolate is less flexible, and more brittle. Consumption of chocolate confectionery encapsulating a non-edible container typically involves fragmentation of the confectionery, and chocolate can partially melt from contact with heat from the user's fingers, adversely impacting the user's experience. Chocolate also can fragment or deform prior to consumption by the user. In addition, chocolate typically has one of only three colours: white, brown and black, and a limited flavour experience. Adding other colours to this limited colour palette of chocolate is difficult because addition of even small quantities of water to melted chocolate can disrupt the delicate balance of ingredients and form a gritty rough mass. In addition, many people adversely react to chocolate, such as by an allergic reaction to one or more ingredients. Thus, there is a need for alternative confectionery products for coating a non-edible container that can expand on the limited colour palette of chocolate, provide for alternative user experiences to interact with the confectionery, exhibit increased physical stability of the confectionery, and allow for consumption of confectionery by chocolate-adverse consumers.

Gummy confectionery is vibrant and can be readily prepared in different colours and flavours. However, current gummy confectionery products are not manufactured in a way that can accurately accommodate a partially, or fully, encapsulated solid object. Most gummy products are solid or have liquid centres. In 3D gummy manufacturing, gummy is loosely dripped into a mould, and gravity and vibration can settle the shape. No product in which gummy is formed around a solid non-edible object exits, nor is a process for preparing such a product known. There exists a need for a confectionery coated container that follows the legal standards in a safe and accessible form, as well as exploits other confectionery materials as the outer layer compared to traditional products. There exists a need for a gummy confectionery-coated non-edible container that utilises an injection moulding production process to conform the confectionery to a non-edible container and allows spatial control over attributes of distinct sections of gummy confectionery product including, for example, attributes selected from among size, position, thickness, colour, flavour and texture.

### SUMMARY OF THE INVENTION

Accordingly, the present invention is directed to a gummy confectionery-coated object that obviates one or more of the limitations and disadvantages of the related art. In some embodiments, the present invention is directed to a gummy confectionery-coated non-edible container. Methods of manufacturing the gummy confectionery-coated non-edible object of non-edible container are also provided.

It is an objective of this invention to form the layer of gummy such that it may partially encapsulate the non-edible container to comply with FDA safety regulations when required. For purposes of this description, 'encapsulation' is defined by the non-edible container being completely covered by the gummy layer, whereas 'partial encapsulation' refers to incomplete coverage.

Furthermore, it is an objective of this invention to comprise the confectionery layer of multiple sections that are separable from adjacent sections by various physical features, such as a perforated line, a groove, an indentation, or a continuous vacancy, to achieve the aforementioned disclosure of the non-edible container to the consumer.

Furthermore, it is an objective of this invention to provide a method of manufacturing a gummy confectionery-coated non-edible object. This method can yield products that include the aforementioned features within, and between, each section of gummy with the use of an external mould which locates the non-edible container during the forming process.

An additional objective of this invention is to form the confectionery layer in such a method as to loosely adhere it to a surface of the non-edible container, wherein 'loosely adhered' is defined by: 'adhered' referring to the gummy layer's capacity to remain in place on the container surface due to surface-to-surface adhesion, rather than protrusions from the non-edible container, connections to adjacent sections, or a combination thereof, that may traditionally provide support for other forms of confectionery; while 'loosely' refers to the ease in which the layer may be removably peeled from the container surface, wherein the layer is removed in a fashion that does not require a tool, and is reasonable for a child to remove with their fingers.

Furthermore, it is an objective of this invention to control the surface texture of the non-edible container and/or the formulation of the confectionery to create an experience which does not leave residue or substantially does not leave residue on the non-edible container following the layer being peeled from the surface.

It is also an objective of this invention to control the size and/or physical form of the non-edible container to ensure that it is not a choking hazard to the consumer.

Additional features and advantages of the invention will be set forth in the description which follows, and in part will be apparent from the description, or may be learned by practice of the invention. The objectives and other advantages of the invention will be realised and attained by the structure particularly pointed out in the written description and claims hereof as well as the appended figures.

It is to be understood that both the foregoing general description and the following detailed description are exemplary and explanatory and are intended to provide further explanation of the invention as claimed.

### DESCRIPTION OF THE DRAWINGS

The accompanying drawings, which are included to provide further understanding of the invention are incorporated and constitute a part of this specification, illustrate embodiments of the invention and together with the description, serve to explain the principles of the invention.

In the drawings:
Figure 1 shows a side view of a preferred embodiment of the invention; a non-edible container with a layer of 8 peelable sections of gummy confectionery.
Figure 2 shows the same embodiment and view of Figure 1, with one of the 8 sections partially peeled from the surface of the non-edible container.
Figure 3 shows a cross sectional view of the invention's embodiment from Figure 1, revealing a toy within the non-edible container.
Figure 4 shows a three-quarter perspective view of the invention's embodiment from Figure 1 with the confectionery layer removed from the non- edible container, and the toy being removed.
Figure 5 shows a side view of a similar embodiment to Figure 1, wherein the sections of removable gummy have unique colours from one another.
Figure 6 shows a side view of an alternative embodiment of the invention, with an example of potential shapes of gummy confectionery sections.
Figure 7 shows a side view of an alternative embodiment of the invention, wherein the sections of gummy form the design of a character on the surface of a non-edible container.
Figure 8 shows a cross sectional view of an alternative embodiment of the invention, wherein the non-edible container's shape may vary, such as a sphere, and/or the contents of the container may be food or other non-toy products.
Figure 9 shows a cross sectional view of an alternative embodiment of the invention, wherein the non-edible container is a cube shape. An encapsulated toy is also revealed within the non-edible container.
Figure 10 displays a cross sectional view of an alternative embodiment similar to figure 3, wherein the peelable sections of gummy confectionery are connected by an indented groove to assist with separation, instead of a gap.
Figure 11 is a side view displaying an alternative embodiment similar to Figure 1, wherein the peelable sections of gummy confectionery are connected by a perforated line to assist with separation, instead of a gap.
Figure 12 is a three-quarter view of a first half of a mould which comprises a cavity that houses a non-edible object to form gummy confectionery on the outer surface of.
Figure 13 is a three-quarter view of a second half of a mould which comprises a cavity that houses a non-edible object to form gummy confectionery on the outer surface of.
Figure 14 shows three-quarter view of an alternative embodiment of Figure 12, wherein the mould comprises water channels through the body of the mould to cool the gummy confectionery after injecting the confectionery into the mould.
Figure 15 is a three-quarter view of an additional alternative embodiment of the mould half of Figure 12, wherein the inner surface of the mould has shapes and icons debossed into it.
Figure 16 shows a three-quarter view of the mould halves from Figure 12 and 13 mated together, forming the non-edible object-housing cavity.
Figure 17 is a cross-sectional side view of the mated mould halves from Figure 16 with a non-edible container located within.
Figure 18 shows a three-quarter view of an alternative embodiment of the mould from Figure 16, wherein the second half is divided into two sections, through its transverse axis.
Figure 19 shows a three-quarter view of an additional alternative embodiment of the mould from Figure 16, wherein the second half is divided into two sections, through its longitudinal axis.

### DETAILED DESCRIPTION OF THE INVENTION

As used herein, "longitudinal" refers to an axis along the lengthwise direction of a body passing through the centre of gravity.

As used herein, "transverse" refers to an axis along the width of a body, orthogonal to and intersecting the longitudinal axis at the centre of gravity.

The invention as disclosed in its present form, comprises of: A polypropylene non-edible container in the shape of an egg, wherein the longitudinal dimension is longer than its transverse dimension and is rotationally symmetrical about its longitudinal axis; A toy encapsulated within the non-edible container; A peelable layer made up of sections of gummy confectionery on the surface of said non-edible container, including gaps between these sections revealing the non-edible container underneath, wherein the gaps are preferably formed by an outer mould during the confectionery forming process.

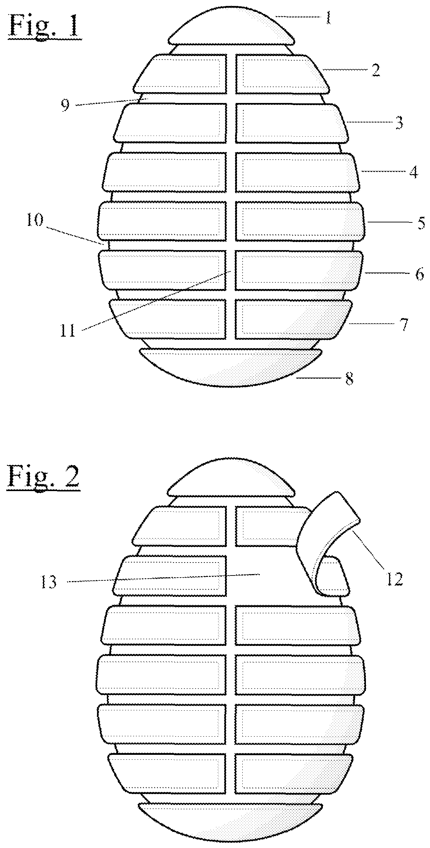

Referring to Figures 1-5, this embodiment comprises of sections **1, 2, 3, 4, 5, 6, 7, 8** of gummy confectionery loosely adhered to the surface of a non-edible, egg-shaped, container **9,** wherein the confectionery layer conforms to its shape. These confectionery sections **1, 2, 3, 4, 5, 6, 7, 8** are separable from adjacent sections by a gap **10** of 0.5mm-2.5mm. Each sections **2, 3, 4, 5, 6, 7** include a gap **11,** 0.5mm-2.5mm in width, to assist with peeling **12** the confectionery from the surface of the container **9.** Upon peeling the loosely adhered confectionery layer from the surface of the container, a residue-free finish **13** remains, due to the surface texture of the container **9,** the formula of the gummy confectionery, or a combination thereof.

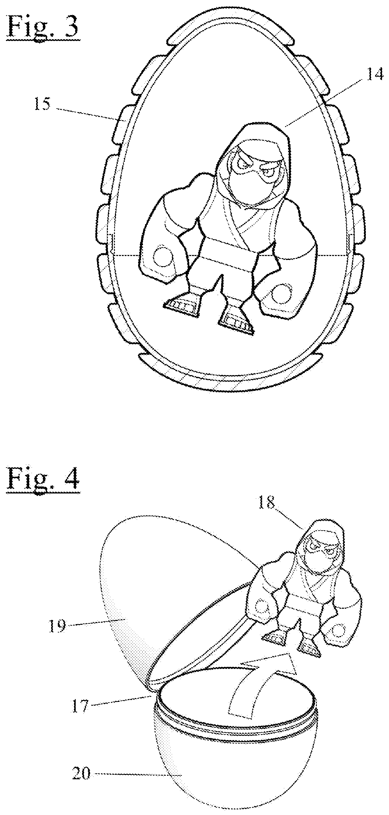

Figure 3 illustrates a cross-sectional view of the embodiment, revealing the encapsulated toy **14** inside the non-edible container. Additionally, the gummy confectionery layer's profile **15** displays the intended thickness to be a thin layer of 1mm-5mm gummy conforming to the supporting curved surface.

Figure 4 shows this embodiment's egg capsule **17,** with the gummy confectionery removed from the surface, and opened into two halves **19, 20** allowing the toy **18** to be removed.

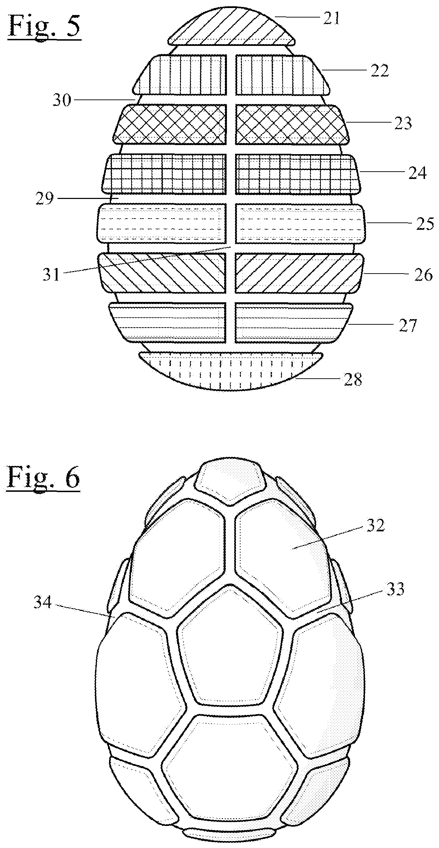

Figure 5 displays a preferred design of the invention's present embodiment, wherein each of the gummy confectionery sections **21, 22, 23, 24, 25, 26, 27, 28** are individually coloured. Furthermore, each of these uniquely coloured sections are uniquely flavoured. For example, the flavours for such sections could be any of the following: cherry, strawberry, orange, pineapple, lemon, lime, apple, raspberry, grape, watermelon, mango, bubble gum, pink grapefruit, cola, chocolate, or a combination thereof.

The embodiment of the invention illustrated in Figure 5 also displays the key features from Figures 1-4 of: sections of gummy confectionery loosely adhered to the surface of a non-edible, egg shaped, container **29** containing a toy, with a gap **30** between each section, and a gap 31 to assist with peeling said sections.

Referring to Figure 6, this embodiment displays potential for alternative designs formed by the gummy confectionery sections **32,** such as pentagons and hexagons, while still featuring the gaps **33** between adjacent shapes to reveal the non-edible container **34.**

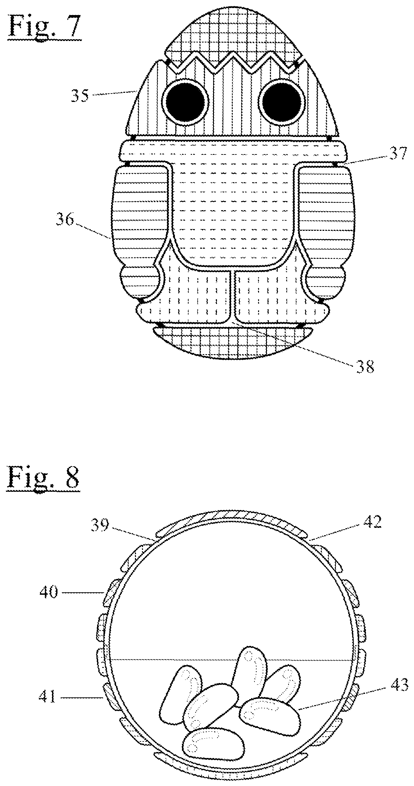

Referring to Figure 7, this embodiment further displays alternative designs, that conform to the non-edible container **38,** using various section shapes. Sections, separable by gaps **37,** may form the design of objects, landscapes, or, in this embodiment, a character wherein the sections **35** may represent heads, arms and other features. Additionally, colour **36** may be used to add to the design cohesion between sections, wherein similar sections may share a colour and flavour, such as left and right arms, however differing sections such as hair may be a different colour and flavour.

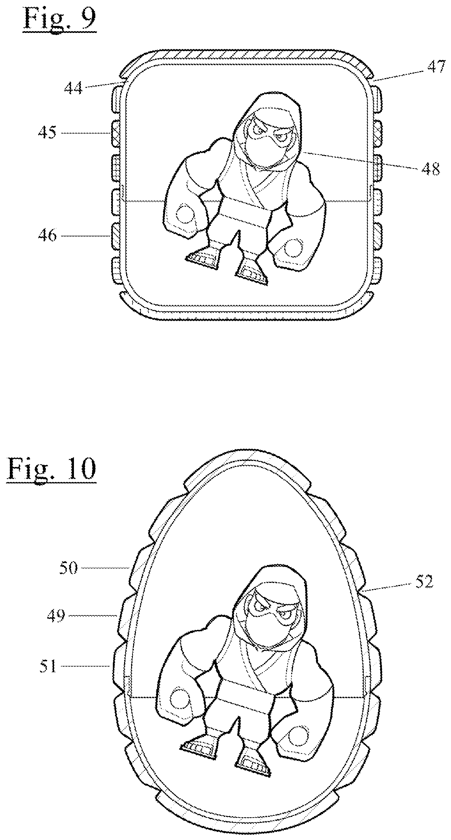

Referring to Figures 8 and 9, these illustrations display embodiments of the invention wherein the non-edible container may be alternative shapes, such as a sphere **39,** a cube **44,** or any other shape that is beneficial to the product design. These embodiments would preferably support one or more sections **40, 45** of confectionery, each with a unique colour & flavour **41, 46.** The section or sections could also comprise features within the section, to assist with peeling, and be separable from any adjacent sections by a gap **42, 47** or alternative features.

Furthermore, whereas Figure 9 shows an encapsulated toy **48** within the non-edible container **44,** Figure 8 shows an embodiment of the invention wherein the encapsulated material **43** within the container **39,** is not a toy, but alternative items such as jelly beans, chocolate, gummy or other food products.

Figure 10 displays an alternative embodiment of the present invention wherein each independently removable section **49** is separable from adjacent sections **50, 51** by indented grooves, such as a V-shaped indentation **52.**

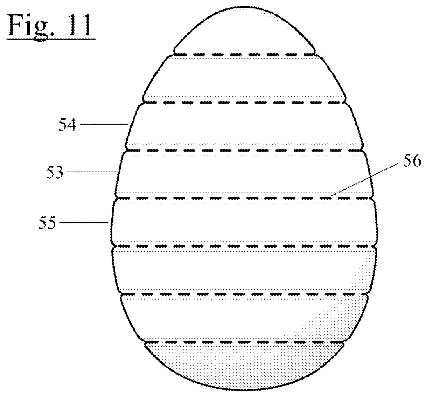

Figure 11 illustrates an embodiment showing an alternative form of the independently removable sections wherein each section **53** is separable from adjacent sections **54, 55** by a perforated tear line **56.**

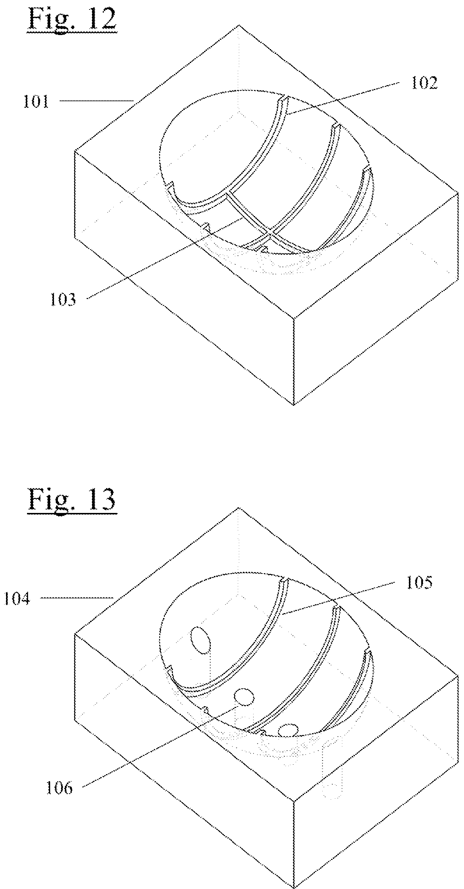

Referring now to Figures 12 to 17, these figures illustrate the method for producing a gummy confectionery-coated non-edible object. Additionally, alternative embodiments of this method are shown.

Figure 12 displays a first half **101** of a mould that is used to prepare the aforementioned preferred embodiments of a gummy confectionery-coated non-edible container similar to Figure 1. This mould shown comprises an inner surface that injected gummy confectionery conforms to and protrusions offset from said inner surface to locate the non-edible container and form the aforementioned gummy confectionery sections. These protrusions include transverse ribs **102** that separate each section of gummy by a gap **10,** and a longitudinal rib **103** that creates a peeling gap **11** to allow the consumer to remove sections of gummy independently.

Figure 13 displays the second half **104** of a mould designed to mate with the first half 101 from Figure 12. The transverse ribs **105** align with the ribs **102,** although this side does not feature a longitudinal rib. The second half **104** features injection holes **106,** to inject the gummy confectionery into, with this embodiment having 1 injection hole for each section of gummy.

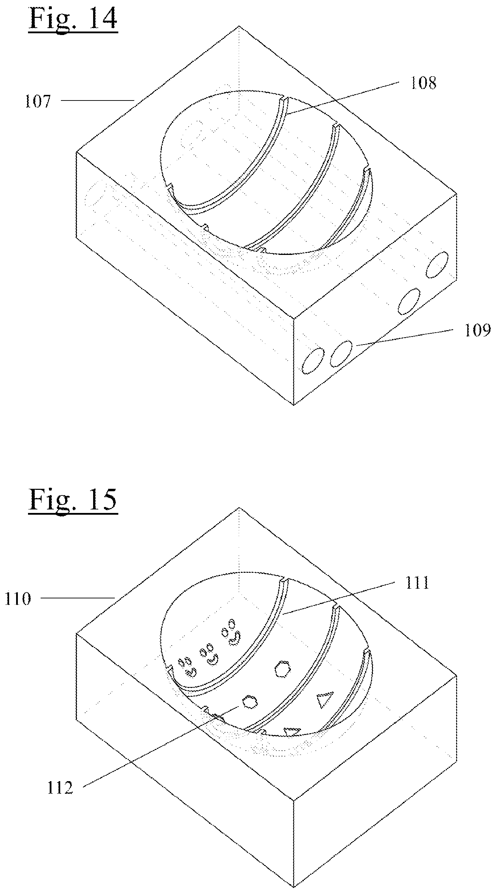

Figure 14 illustrates an alternative embodiment of a first half **107** of a mould that could mate with the second half **104** from Figure 13. This mould does not contain a longitudinal rib yet retains the transverse ribs **108** to provide multiple cavities for receiving gummy. This mould additionally comprises cooling channels **109** within the body of the mould that may allow for rapid cooling of the mould, and consequent cooling of the gummy confectionery. Alternatively, these cooling channels could also be designed to receive refrigerant, coolant liquid, or cold air.

Figure 15 further displays an alternative embodiment of a first half **110** of a mould that could mate with the second half **104** from Figure 13. This mould half also retains multiple transverse ribs **111** for locating the non-edible container and creating discrete cavities, however the inner surface of the mould comprises debossed shapes **112.** This illustrates the ability to form complex geometry and texture into the formed gummy sections such as polygons, letters, symbols, icons, fruit, or any other features that may improve the sensation or appearance of the gummy.

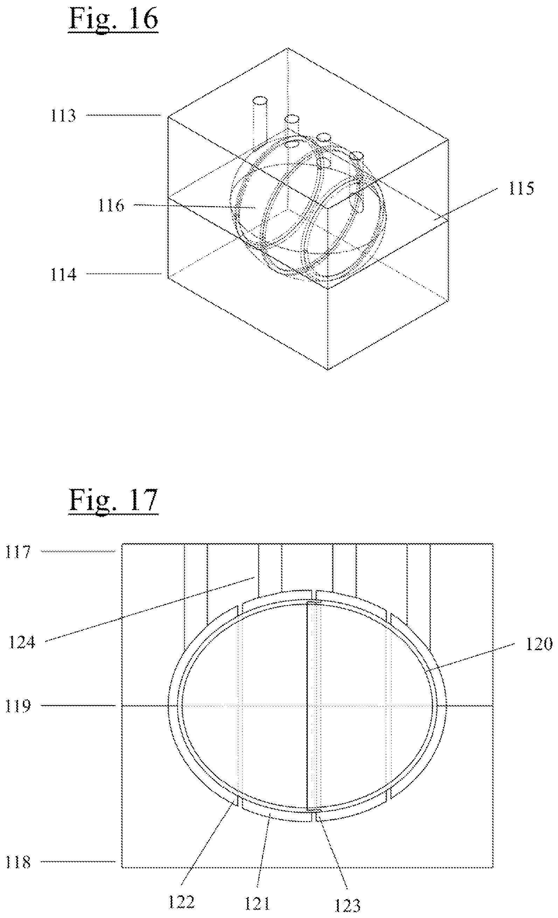

Figure 16 displays a preferred embodiment of a closed mould comprising a first **113** and second **114** half mated at a coupling face **115.** These two halves, when mated, form an interior cavity **116** capable of receiving a non-edible object that the protrusions and/or inner surface have been contoured to and/or offset from.

Figure 17 further shows a cross-sectional view of two mould halves **117, 118** mated at a coupling plane **119** containing a non-edible object, wherein the object is a non-edible container **120.** This view shows the fixed location of the non-edible container within the mould's contoured ribs and offset inner surface, and the separation of discrete cavities between the transverse ribs. The injection hole **124** allows for gummy to be injected into the cavity **121** between the transverse ribs **122, 123.** The inner surface of the mould halves can be seen to be contoured and offset from the outer surface of the non-edible container, providing a vacancy with uniform thickness, wherein the resulting injected gummy sections would have uniform thickness.

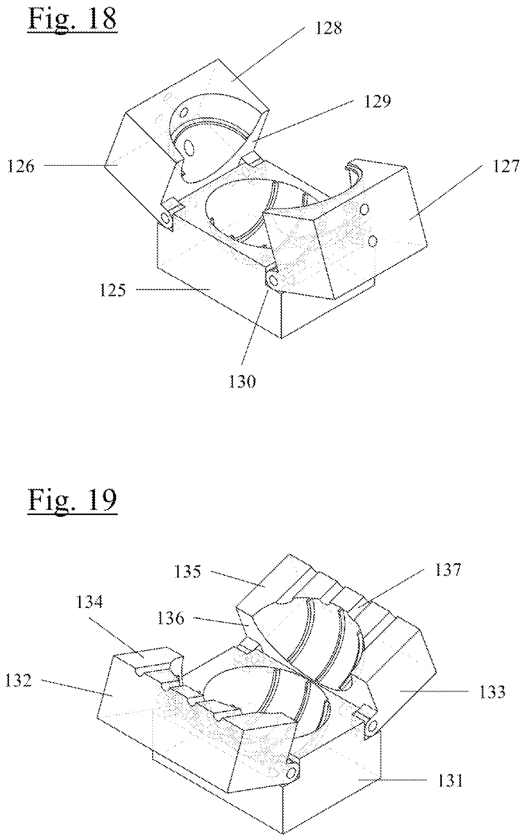

Referring now to Figures 18 and 19, in some alternative embodiments, the aforementioned second half of the mould could be further divided into two parts, through its longitudinal or transverse axis, wherein the dividing plane is perpendicular to the mating plane between the two halves. This division of the second half could produce a folding mould, wherein the mould comprises of a first half, and a second and third section that make up the second half, wherein these second and third sections are each independently connected, via a hinge or a linear rail, to the first half. Furthermore, this division of the second half could be useful to ensure a lower surface area for the gummy confectionery to stick to compared to the first half when opening the mould after cooling. This would provide a more stable mould release process, wherein the gummy confectionery coated non-edible object remains in the first half of the mould upon opening the closed mould to remove the gummy confectionery-coated non-edible object.

Figure 18 displays an alternative embodiment of the mould in Figure 16, wherein the mould comprises a first half **125** and a second half that is divided into a first **126** and second **127** section through its transverse axis. Upon closing the mould, each section of the second half would mate to the other with a face **128,** and with the first half of the mould with a face **129,** wherein faces **128 129** are perpendicular. Each section of the second half in this embodiment is connected to the first half via a hinge **130.**

Figure 19 illustrates an additional alternative embodiment of the mould in Figure 16, wherein the mould comprises of a first half **131** and a second half divided into a first **132** and second **133** section and connected via a hinge as in the embodiment of Figure 18, however, the second half in this embodiment is divided through its longitudinal axis. Each section of the second half mates with the other with the faces **134 135** and with the first half of the mould with the face **136,** wherein the faces **134 135** are perpendicular to **136.** This embodiment additionally divides the injection holes **137** which seal upon closing of the mould sections.

The present and alternative embodiments of the mould, for example, could be mated together using mechanisms such as a hinge, bolts, magnets, automated power screws, cam locks, linear slide rails or other well-known clamping methods.

The mould can be prepared from any suitable material, such as, for example, aluminium, stainless steel, silicone, or any combination thereof. Selection of a suitable material is within the ability of the skilled artisan. Characteristics of the material that can be considered include, for example, thermal properties, machining time, and durability. For example, a durable material can minimize damage to the mating surfaces after repeated clamping of the two mould halves.

The moulds for use in the methods provided herein can be coated with a permanent or temporary coating to decrease adherence of gummy confectionery to the mould surface. Decreasing adherence of gummy confectionery can facilitate release of the gummy confectionery-coated non-edible object from the mould. Examples of coatings that can be applied to the mould surface include Polytetrafluoroethylene (PTFE), Perfluoroalkoxy alkane (PFA), Fluorinated Ethylene Propylene (FEP), Ethylene Tetrafluoroethylene (ETFE), carnauba wax, corn oil, palm oil, or coconut oil. In some methods provided herein the mould can be sandblasted, or otherwise roughened, before applying a permanent coating.

A gummy confectionery-coated non-edible container can be prepared by injection moulding gummy into a mould housing a non-edible container. In an exemplary embodiment, the gummy confectionery-coated non-edible container can comprise 8 sections of independently separable gummy coating, an egg-shaped non-edible container, and a surprise toy therein. Each confectionery section can contain a fruit flavour and a corresponding colour. The non-edible container can be made of polypropylene (PP) with a glossy white colour. Two sections of the non-edible container can be attached by a snap joint to form a sealed container. The gummy confectionery coating can be applied by hot injection moulding within a PTFE coated mould, wherein the injection of gummy is controlled with a pump with adequate volume accuracy. After injection of hot gummy confectionery, the gummy confectionery can be cooled by cooling the mould with cold air or water.

The gummy confectionery can be prepared to meet an injection temperature suitable to control key parameters that may affect the forming process such as viscosity, or heat energy. As the temperature is increased, the viscosity decreases which may require lower injection pressure, however higher temperature may also result in longer cooling time of the mould and gummy confectionery layer.

Once the gummy is sufficiently set, the mould can be opened to remove the gummy confectionery-coated container where it can be left to dry in a humidity-controlled environment. This drying process can be used to achieve desired gummy texture and reduce the adhesion of the outer surface of the gummy layer. Once dried, a fine layer of vegetable oil & carnauba wax solution can be applied to improve glossiness and further reduce stickiness adhesive properties of the gummy surface.

The invention has been described with examples relevant to its current form, however, potential embodiments will include any form that is within the scope of the appended claims. It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

### CLAUSES

1. An article comprising of a layer of gummy confectionery loosely adhered to an outer surface of a non-edible container, wherein said non-edible container contains a toy.
2. The article of clause 1, wherein the confectionery layer partially, or completely, covers the non-edible container.
3. The article of clause 1 or 2, wherein the non-edible container is an egg-like shape.
4. The article of any one of clauses 1 to 3, wherein the contained toy is a surprise toy that is not explicitly revealed until said container is opened.
5. The article of any one of clauses 1 to 4, wherein the gummy confectionery layer thickness is between 1 mm-5mm, inclusive.
6. The article of any one of clauses 1 to 5, wherein the gummy confectionery layer is flexible, and can be removed from the non-edible container without sustaining brittle fragmentation.
7. The article of clause 6, wherein the gummy confectionery layer is removed by peeling it from the non-edible container.
8. The article of any one of clauses 1 to 7, wherein the layer of gummy confectionery is comprised of one or more sections, wherein each section or sections is removable independently of any other section or sections.
9. The article of clause 7, wherein the number of independently removable sections is between 2 and 10, inclusive.
10. The article of clause 7 or 9, wherein one or more independently removable section or sections of gummy confectionery are separable from adjacent sections by including any of the following features between said sections: An indented groove, a perforation, a gap, or a combination thereof.
11. The article of any one of clauses 8 to 10, wherein one or more independently removable section or sections includes any of the following features to assist with removing said removable section from the non-edible container: An indented groove, a perforated line, a gap, or a combination thereof.
12. The article of any one of clauses 1 to 11, wherein the layer of gummy confectionery comprises of two or more colours.
13. The article of any one of clauses 8 to 12, wherein the layer of gummy confectionery comprises of more than one colour, wherein each independently removable section or sections is a single colour.
14. The article of any one of clauses 8 to 13, wherein the layer of gummy confectionery comprises of more than one flavour, wherein each independently removable section or sections is a single flavour.
15. The article of clause 13 and clause 14, wherein each colour corresponds to a flavour for all sections of said colour.
**16.** The article of any one of clauses 1 to 15, wherein the gummy confectionery layer constitutes of one or more of the following gelling agents: Bovine Gelatine, Porcine Gelatine, Fish Gelatine, Modified Starch, Pectin, Carrageenan, and Agar.
**17.** The article of any one of clauses 1 to 16, wherein the gummy confectionery layer comprises Sorbitol.
**18.** The article of any one of clauses 1 to 17, wherein the gummy confectionery layer comprises Maltitol.
**19.** An article comprising of a layer of gummy confectionery loosely adhered to an outer surface of a non-edible container, wherein the layer of gummy partially, or completely, covers the non-edible container.
**20.** The article of clause 19, wherein the gummy confectionery layer thickness is between 1mm-5mm, inclusive.
**21.** The article of clause 19 or 20, wherein the gummy confectionery layer is flexible, and can be removed from the non-edible container without sustaining brittle fragmentation.
**22.** The article of clause 21, wherein the gummy confectionery layer is removed by peeling it from the non-edible container.
**23.** The article of any one of clauses 19 to 22, wherein the layer of gummy confectionery is comprised of one or more sections, wherein each section or sections is removable independently of any other section or sections.
**24.** The article of clause 23, wherein the number of independently removable sections is between 2 and 10, inclusive.
**25.** The article of clause 23 or 24, wherein one or more independently removable section or sections of gummy confectionery are separable from adjacent sections by including any of the following features between said sections: An indented groove, a perforation, a gap, or a combination thereof.
**26.** The article of any one of clauses 23 to 25, wherein one or more independently removable section or sections includes any of the following features to assist with removing said removable section from the non-edible container: An indented groove, a perforated line, a gap, or a combination thereof.
**27.** The article of any one of clauses 19 to 26, wherein the layer of gummy confectionery comprises of two or more colours.
**28.** The article of any one of clauses 23 to 27, wherein the layer of gummy confectionery comprises of more than one colour, wherein each independently removable section or sections is a single colour.
**29.** The article of any one of clauses 23 to 28, wherein the layer of gummy confectionery comprises of more than one flavour, wherein each independently removable section or sections is a single flavour.
**30.** The article of clause 28 and clause 29, wherein each colour corresponds to a flavour for all sections of said colour.
**31.** The article of any one of clauses 19 to 30, wherein the gummy confectionery layer constitutes of one or more of the following gelling agents: Bovine Gelatine, Porcine Gelatine, Fish Gelatine, Modified Starch, Pectin, Carrageenan, and Agar.
**32.** The article of any one of clauses 19 to 31, wherein the gummy confectionery layer comprises Sorbitol.
**33.** The article of any one of clauses 19 to 32, wherein the gummy confectionery layer comprises Maltitol.
**34.** An article comprising of two or more sections of gummy confectionery on an outer surface of a non-edible container, wherein one or more of the two or more gummy confectionery sections is independently separable from any of the two or more gummy confectionery sections by an indented groove, a perforated line, a gap, or a combination thereof.
**35.** The article of clause 30, wherein the confectionery layer partially, or completely, covers the nonedible container.
**36.** The article of clause 30 or 31, wherein the gummy confectionery layer thickness is between 1 mm-5mm, inclusive.
**37.** The article of any one of clauses 34 to 36, wherein the gummy confectionery sections are flexible, and can be removed from the non-edible container without sustaining brittle fragmentation.
**38.** The article of clause 37, wherein the gummy confectionery sections are removed by peeling them from the non-edible container.
**39.** The article of any one of clauses 34 to 38, wherein the number of independently removable sections is between 2 and 10, inclusive.
**40.** The article of any one of clauses 34 to 39, wherein one or more independently removable section or sections includes any of the following features to assist with removing said removable section from the non-edible container: An indented groove, a perforated line, a gap, or a combination thereof.
**41.** The article of any one of clauses 34 to 40, wherein the layer of gummy confectionery comprises of two or more colours.
**42.** The article of any one of clauses 34 to 41, wherein the layer of gummy confectionery comprises of more than one colour, wherein each independently removable section or sections is a single colour.
**43.** The article of any one of clauses 34 to 42, wherein the layer of gummy confectionery comprises of more than one flavour, wherein each independently removable section or sections is a single flavour.
**44.** The article of clause 42 and clause 43, wherein each colour corresponds to a flavour for all sections of said colour.
**45.** The article of any one of clauses 34 to 44, wherein the gummy confectionery layer constitutes of one or more of the following gelling agents: Bovine Gelatine, Porcine Gelatine, Fish Gelatine, Modified Starch, Pectin, Carrageenan, and Agar.
**46.** The article of any one of clauses 34 to 45, wherein the gummy confectionery layer comprises Sorbitol.
**47.** The article of any one of clauses 34 to 46, wherein the gummy confectionery layer comprises Maltitol.
**48.** A method of preparing a gummy confectionery-coated non-edible object, comprising: placing a non-edible object into a mould; closing the mould; and injecting gummy confectionery into the closed mould to form one of more sections of gummy confectionery on an outer surface of the non-edible object.
**49.** A method of clause 48, wherein the mould comprises a first half and a second half, each with an inner surface, that mate together at their respective faces to form a hollow interior to house the non-edible object.
**50.** The method of clause 49, wherein the second half of the mould is further comprised of two sections that mate together to form the inner surface of said second half.
**51.** The method of clause 48, wherein the non-edible object is a non-edible container.
**52.** The method of any one of clauses 48 to 51, wherein one or more protrusions from an inner surface of the mould, when containing the non-edible object, centralise the non-edible object within the mould.
**53.** The method of any one of clauses 48 to 52, wherein one or more protrusions from an inner surface of the mould, when containing the non-edible object, creates one or more discrete cavities between the inner surface of the mould and the outer surface of the non-edible object, wherein the injected gummy fills the discrete cavities.
**54.** The method of clause 53, wherein the protrusions of the mould, when containing the nonedible object, creates one or more cavities between the inner surface of the mould and the outer surface of the non-edible object, wherein each cavity, when injected with gummy, forms sections of gummy separable from adjacent sections by any of the following features between said sections: An indented groove, a perforation, a gap, or a combination thereof.
**55.** The method of clauses 52 or 54, wherein each of the one or more cavities comprise of one or more injection holes.
**56.** The method of any one of clauses 48 to 55, wherein the inner surface of the mould comprises shapes, letters, fruit, or any combination thereof embossed from said surface, wherein the layer of gummy confectionery is debossed with said shapes, letters, or fruit.
**57.** The method of any one of clauses 48 to 56, wherein the inner surface of the mould comprises shapes, letters, fruit, or any combination thereof debossed into said surface, wherein the layer of gummy confectionery is embossed with said shapes, letters, or fruit.
**58.** The method of any one of clauses 51 to 57, wherein the non-edible container is made of plastic.
**59.** The method of any one of clauses 48 to 58, further comprising cooling the injected gummy confectionery.
**60.** The method of clause 59, wherein the gummy confectionery is cooled by exposing the closed mould to air
**61.** The method of clause 60, wherein the temperature of the air is between 0-10°C, inclusive.
**62.** The method of clause 59, wherein the gummy confectionery is cooled by immersing the closed mould into water
**63.** The method of clause 59, wherein the mould comprises one or more cooling channels that pass through the solid section of the mould, further comprising of water flowing through the cooling channels that cool the mould and gummy confectionery.
**64.** The method of clauses 62 or 63, wherein the temperature of the water is 1-10°C, inclusive.
**65.** The method of any one of clauses 59 to 64, further comprising, after cooling the moulded gummy confectionery: opening the mould; and removing the gummy-coated non-edible object;
**66.** The method of any one of clauses 48 to 65, wherein the gummy confectionery is injected at a temperature that is within 50-70°C, inclusive.
**67.** The method of any one of clauses 48 to 66, wherein the mould comprises an ejector pin.
**68.** The method of any one of clauses 48 to 67, wherein the inner surface of the mould comprises a non-stick coating.
**69.** The method of clause 68, wherein the non-stick coating comprises of Polytetrafluoroethylene (PTFE), Perfluoroalkoxy alkane (PFA), Fluorinated Ethylene Propylene (FEP), Ethylene Tetrafluoroethylene (ETFE), carnauba wax, corn oil, palm oil, coconut oil, or a combination thereof.

## Claims

1. An article for containing a toy comprising:
multiple sections of gummy confectionery layer loosely adhered to an outer surface of a non-edible container, wherein each section of the multiple sections is removable from the outer surface independently from other sections of the multiple of sections by one or more physical features.

2. The article as claimed in claim 1, wherein the confectionery layer partially, or completely, covers the non-edible container.

3. The article as claimed in claims 1 or 2, wherein the non-edible container is an egg-like shape.

4. The article as claimed in any one of claims 1 to 3, wherein the contained toy is a surprise toy that is not explicitly revealed until said container is opened.

5. The article as claimed in any one of claims 1 to 4, wherein the gummy confectionery layer thickness is between 1 mm and 5mm, inclusive.

6. The article as claimed in any one of claims 1 to 5, wherein the gummy confectionery layer is flexible, and can be removed from the non-edible container without sustaining fragmentation.

7. The article as claimed in any one of claims 1 to 6, wherein the gummy confectionery layer is removed by peeling it from the non-edible container.

8. The article as claimed in any one of claims 1 to 7, wherein the number of independently removable sections is between 2 and 10, inclusive.

9. The article as claimed in any one of claims 1 to 8, wherein one or more independently removable section or sections of gummy confectionery are separable from adjacent sections by including any of the following physical features between said sections: an indented groove, a perforation, or a combination thereof.

10. The article as claimed in any one of claims 1 to 9, wherein one or more independently removable section or sections includes any of the following physical features to assist with removing said removable section from the non-edible container: an indented groove, a perforated line, or a combination thereof.

11. The article as claimed in any one of claims 1 to 10, wherein the layer of gummy confectionery comprises two or more colours.

12. The article as claimed in any one of claims 1 to 11, wherein the layer of gummy confectionery comprises more than one colour, wherein each independently removable section is a single colour.

13. The article as claimed in any one of claims 1 to 12, wherein the layer of gummy confectionery comprises more than one flavour, wherein each independently removable section is a single flavour.

14. The article as claimed in any one of claims 12 or 13, wherein each colour corresponds to a flavour for all sections of said colour.

15. The article as claimed in any one of claims 1 to 14, wherein the gummy confectionery layer constitutes of one or more of the following gelling agents: Bovine Gelatine, Porcine Gelatine, Fish Gelatine, Modified Starch, Pectin, Carrageenan, and Agar.
